# EUROPÄISCHE PATENTSCHRIFT

(11) **EP 4 054 787 B1**
(45) Veröffentlichungstag und Bekanntmachung des Hinweises auf die Patenterteilung: **31.05.2023**
(21) Anmeldenummer: 19798298.6
(22) Anmeldetag: 05.11.2019
(51) Int. Cl.: B23K 20/10, H01R 43/02

(54) **ULTRASCHALLSCHWEISSEINRICHTUNG MIT V-FÖRMIGER FÜGETEILAUFNAHME**
ULTRASONIC WELDING DEVICE WITH A V-SHAPED JOINING PART RECEPTACLE
DISPOSITIF DE SOUDAGE PAR ULTRASONS À LOGEMENT DE PIÈCES À ASSEMBLER EN FORME DE V

(43) Veröffentlichungstag der Anmeldung: 14.09.2022
(73) Patentinhaber: Schunk Sonosystems GmbH, 35435 Wettenberg (DE)
(72) Erfinder: FEY, Manuel, 35585 Blasbach (DE); MÜLLER, Stefan, 35580 Wetzlar (DE); WAGENBACH, Rainer, 35799 Merenberg (DE); WERNER, Waldemar, 35447 Reiskirchen (DE); GÜNTHER, Daniel, 35428 Langgöns (DE); KOSECKI, Dariusz, 35444 Biebertal (DE); BECKER, Stephan, 35037 Marburg (DE); KOCH, Eugen, 35305 Grünberg (DE)
(74) Vertreter: Qip Patentanwälte Dr. Kuehn & Partner mbB
(86) Internationale Anmeldenummer: PCT/EP2019/080241
(87) Internationale Veröffentlichungsnummer: WO 2021/089122

(56) Entgegenhaltungen:
- WO-A1-2006/005509
- WO-A1-2018/155721

## Beschreibung

### GEBIET DER ERFINDUNG

Die vorliegende Erfindung betrifft eine Ultraschallschweißeinrichtung.

### HINTERGRUND DER ERFINDUNG

Für verschiedenste technische Anwendungen kann es notwendig sein, zwei Komponenten mechanisch fest und/oder elektrisch leitfähig miteinander zu verbinden. Beispielsweise kann es für verschiedene Einsatzzwecke erforderlich sein, Kabel bzw. deren Litzen mechanisch und elektrisch leitfähig miteinander zu verbinden. Hierdurch können beispielsweise Kabelstränge oder Kabelbäume gefertigt werden, mithilfe derer elektrische Verbraucher zum Beispiel innerhalb eines Fahrzeugs miteinander, mit einer Energiequelle und/oder mit einer Steuerung elektrisch verbunden werden können.

Um zwei elektrisch leitfähige Komponenten stoffschlüssig und somit mechanisch belastbar und elektrisch gut leitfähig miteinander zu verbinden, wurde das sogenannte Ultraschallschweißen entwickelt. Dabei handelt es sich um eine spezielle Ausprägung des Reibschweißens, bei dem zu verschweißende Komponenten, die auch als Fügepartner oder Schweißgut bezeichnet werden, mit Oberflächen aneinander in Anlage gebracht und unter geringem Druck und hochfrequenten mechanischen Schwingungen gegeneinander bewegt werden. Die Schwingungen können hierbei mithilfe einer Sonotrode erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden.

Ultraschallschweißen kann insbesondere auch zum Verschweißen metallischer Fügepartner wie zum Beispiel Litzen von Kabeln eingesetzt werden, was auch als Ultraschallmetallschweißen bezeichnet wird. Hierzu werden die Fügepartner im Allgemeinen in einen Aufnahmeraum einer Ultraschallschweißeinrichtung zwischen die Sonotrode und einen Amboss eingelegt und dort mit einem vorgegebenen Druck zusammengepresst. Die über die Sonotrode eingekoppelten Schwingungen bewirken, dass die beiden Fügepartner aufeinander bzw. gegeneinander gerieben werden und dadurch im festen Zustand stoffschlüssig miteinander verbunden werden. Obwohl der Schmelzpunkt der zu verbindenden Metalle nicht erreicht wird, kann durch Kurzstreckendiffusion eine hochfeste, homogene und dauerhafte Metallschweißverbindung erzeugt werden.

Um eine Schweißverbindung mit hoher Festigkeit zu erzeugen, ist es wichtig, dass die Fügepartner korrekt zueinander positioniert werden, bevor sie miteinander verschweißt werden. Beim Verschweißen abisolierter Kabelenden ist beispielsweise zu vermeiden, dass zwei oder mehr Kabelenden auf der Sonotrode nebeneinanderliegen. Stattdessen sollten die Kabelenden möglichst so in die Ultraschallschweißeinrichtung eingelegt werden, dass sie übereinander liegen. Je nach Übung eines Bedieners der Ultraschallschweißeinrichtung kann ein korrektes Einlegen der Kabelenden mehr oder weniger Zeitaufwand erfordern.

Die EP 2 981 389 B1 beschreibt beispielsweise einen Seitenschieber mit einer kippbaren Stirnfläche, durch die Kabelenden in einem Schweißraum übereinander angeordnet werden können.

WO 2006/005509 A1 offenbart eine Ultraschallschweißeinrichtung nach dem Oberbegriff des Anspruchs 1.

### ZUSAMMENFASSUNG DER ERFINDUNG UND VORTEILHAFTER AUSFÜHRUNGSFORMEN

Es kann ein Bedarf an einer Ultraschallschweißeinrichtung bestehen, in die Fügeteile mit möglichst geringem Aufwand so eingelegt werden können, dass sie sich in einer möglichst günstigen Position für einen nachfolgenden Schweißprozess befinden.

Einem solchen Bedarf kann mit dem Gegenstand des unabhängigen Anspruchs entsprochen werden. Vorteilhafte Ausführungsformen sind in den abhängigen Ansprüchen sowie der nachfolgenden Beschreibung definiert.

Ein erster Aspekt der Erfindung betrifft eine Ultraschallschweißeinrichtung, die eine Sonotrode mit einer Sonotrodenfläche, einen Seitenschieber mit einer Seitenschieberfläche, ein Touchierelement mit einer Touchierfläche und einen Einlegeraum zum Einlegen von Fügeteilen aufweist. Der Einlegeraum ist in einer ersten Achsenrichtung an einer ersten Seite durch die Sonotrodenfläche und in einer zweiten Achsenrichtung an einer zweiten Seite durch die Seitenschieberfläche und an einer der zweiten Seite gegenüberliegenden dritten Seite durch die Touchierfläche begrenzt. Des Weiteren weist die Ultraschallschweißeinrichtung ein erstes Aufnahmeelement mit einer ersten Anschlagkante und ein zweites Aufnahmeelement mit einer zweiten Anschlagkante auf. Das erste Aufnahmeelement und das zweite Aufnahmeelement sind zwischen einer Ausgangsposition und einer Endposition relativ zueinander bewegbar angeordnet. In der Endposition sind die erste Anschlagkante und die zweite Anschlagkante gegenüber einer offenen Seite des Einlegeraums zusammengeführt, um eine Fügeteilaufnahme zum Aufnehmen der Fügeteile zu bilden. In der Ausgangsposition sind die erste Anschlagkante und die zweite Anschlagkante auseinandergeführt. Dabei ist die Fügeteilaufnahme v-förmig ausgeführt, um die

Fügeteile in der ersten Achsenrichtung und der zweiten Achsenrichtung in dem Einlegeraum zu positionieren.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Unter einem Einlegeraum kann ein Raum verstanden werden, in den die Fügeteile vor einem Schweißvorgang eingelegt werden. Der Einlegeraum kann an zumindest drei Seiten begrenzt sein, sodass die Fügeteile lediglich in einem begrenzten Volumen Platz finden.

Die Sonotrodenfläche kann sich zumindest abschnittsweise zwischen der Seitenschieberfläche und der Touchierfläche erstrecken. Die zweite Achsenrichtung kann beispielsweise orthogonal zur ersten Achsenrichtung bzw. parallel zur Sonotrodenfläche ausgerichtet sein. Das bedeutet, dass die Sonotrodenfläche annähernd, d. h. innerhalb eines vorgegebenen Toleranzbereichs, orthogonal zur Seitenschieberfläche bzw. Touchierfläche ausgerichtet sein kann. Alternativ ist es möglich, dass die Sonotrodenfläche leicht schräg zur Seitenschieberfläche bzw. Touchierfläche ausgerichtet ist. Die Seitenschieberfläche und die Touchierfläche können annähernd, d. h. innerhalb eines vorgegebenen Toleranzbereichs, parallel oder auch leicht schräg zueinander ausgerichtet sein.

Der Einlegeraum kann in einer dritten Achsenrichtung an zumindest einer Seite zumindest abschnittsweise offen sein. Dabei kann die dritte Achsenrichtung orthogonal zur ersten Achsenrichtung und zur zweiten Achsenrichtung ausgerichtet sein.

Beispielsweise kann der Einlegeraum links durch die Seitenschieberfläche, d. h. einer Oberfläche des Seitenschiebers, und rechts durch die Touchierfläche, d. h. einer Oberfläche des Touchierelements, begrenzt sein. Dabei kann der Einlegeraum unten durch die Sonotrodenfläche, d. h. von einer Oberfläche der Sonotrode, begrenzt sein. An einer der Sonotrodenfläche gegenüberliegenden Seite, beispielsweise oben, kann der Einlegeraum zumindest abschnittsweise offen sein, um ein Einlegen der Fügeteile in der ersten Achsenrichtung, beispielsweise von oben, zu ermöglichen. In der dritten Achsenrichtung kann der Einlegeraum an mindestens einer Seite, beispielsweise vorn und/oder hinten, zumindest abschnittsweise offen sein, um ein Einlegen der Fügeteile in der dritten Achsenrichtung, beispielsweise von vorn und/oder hinten, zu ermöglichen. Anders ausgedrückt können die Seitenschieberfläche, die Touchierfläche und die Sonotrodenfläche den Einlegeraum wie ein offener Rahmen, insbesondere wie ein u-förmiger Rahmen, umgeben.

Insbesondere zum Schweißen sogenannter Durchgangsknoten kann der Einlegeraum in der dritten Achsenrichtung an zwei einander gegenüberliegenden Seiten zumindest abschnittsweise offen sein, um ein Einlegen der Fügeteile in zueinander entgegengesetzten Richtungen zu ermöglichen.

Unter einer den Einlegeraum begrenzenden Seite kann eine Seite verstanden werden, an der die Fügeteile an die Seitenschieberfläche, die Touchierfläche bzw. die Sonotrodenfläche anstoßen. Das heißt, die Fügeteile können nicht über eine durch die Seitenschieberfläche, die Touchierfläche bzw. die Sonotrodenfläche Begrenzung hinaus aus dem Einlegeraum herausbewegt werden. Um eine derartige Begrenzung für die Fügeteile zu bilden, ist es nicht unbedingt erforderlich, dass die jeweiligen Seiten des Einlegeraums vollständig durch die Seitenschieberfläche, die Touchierfläche bzw. die Sonotrodenfläche abgedeckt sind. Alternativ kann der Einlegeraum an den jeweiligen Seiten auch nur teilweise abgedeckt sein, solange sichergestellt ist, dass die Fügeteile nicht aus dem Einlegeraum herausbewegt werden können.

Der Seitenschieber kann beispielsweise in der zweiten Achsenrichtung bewegbar angeordnet sein, sodass die Seitenschieberfläche und die Touchierfläche aufeinander zu- bzw. voneinander wegbewegt werden können. Auf diese Weise kann der Einlegeraum in der zweiten Achsenrichtung verkleinert bzw. vergrößert werden. Beispielsweise kann dadurch eine maximale Breite des Einlegeraums vorgegeben werden.

Nach dem Einlegen der Fügeteile kann der Einlegeraum temporär zu einem Schweißraum verkleinert werden, indem zum einen die Seitenschieberfläche und die Touchierfläche, etwa durch Bewegen des Seitenschiebers in der zweiten Achsenrichtung, relativ aufeinander zubewegt werden und zum anderen die Sonotrodenfläche und eine Ambossfläche eines Ambosses, etwa durch Bewegen des Ambosses in der ersten Achsenrichtung, relativ aufeinander zubewegt werden. Die Fügeteile können dabei mit einem definierten Druck zusammengedrückt werden.

Das erste Aufnahmeelement und das zweite Aufnahmeelement können beim Bewegen in die Endposition relativ aufeinander zubewegt werden und beim Bewegen in die Ausgangsposition relativ voneinander wegbewegt werden. Hierzu können beide Aufnahmeelemente bewegbar angeordnet sein. Möglich ist aber auch, dass nur eines der beiden Aufnahmeelemente bewegbar angeordnet ist. In der Endposition können die beiden Anschlagkanten so zueinander positioniert sein, dass eine Anordnung der Fügeteile in der ersten Achsenrichtung und der zweiten Achsenrichtung eingeschränkt ist. Dies kann dadurch erreicht werden, dass die beiden Anschlagkanten eine v-Form oder Keilform ausbilden, die sich in der ersten Achsenrichtung hin zur Sonotrodenfläche verjüngt. Anders ausgedrückt kann die durch die beiden Aufnahmeelemente gebildete Fügeteilaufnahme einen v-förmigen oder keilförmigen Ausschnitt aufweisen, in den die Fügeteile eingelegt werden können. Somit kann gewährleistet werden, dass die Fügeteile sowohl in der zweiten Achsenrichtung relativ zur Seitenschieberfläche und zur Touchierfläche als auch in der ersten Achsenrichtung relativ zur Sonotrodenfläche eine definierte Lage einnehmen.

Unter einem Zusammenführen bzw. Auseinanderführen der beiden Anschlagkanten kann eine Relativbewegung zwischen den beiden Anschlagkanten mit dem Ziel, diese einander anzunähern bzw. voneinander zu entfernen, verstanden werden. Die beiden Anschlagkanten können geradlinig und/oder bogenförmig verlaufen und relativ zur Sonotrodenfläche gleich oder unterschiedlich stark geneigt sein. Dementsprechend kann unter einer v-Form oder Keilform je nach Ausführung der Anschlagkanten auch eine asymmetrische Form oder eine Form mit einer zumindest abschnittsweise geschwungenen Kontur verstanden werden.

Die beiden Anschlagkanten der Fügeteilaufnahme, oder deren gedachte Verlängerungslinien, können in einer Spitze, d. h. einem eng begrenzten Bereich, zusammenlaufen. Unter einer Spitze kann auch eine Rundung bzw. eine verrundete Spitze verstanden werden. Die Spitze kann beispielsweise in einem Zwischenraum zwischen einer durch die Seitenschieberfläche aufgespannten Ebene und einer durch die Touchierfläche aufgespannten Ebene angeordnet sein. Dabei können sich die beiden Anschlagkanten miteinander berühren oder auch nicht miteinander berühren. Die v-Form oder Keilform kann symmetrisch oder asymmetrisch sein, d. h., die durch die beiden Anschlagkanten gebildeten Schenkel der v-Form oder Keilform können annähernd gleiche oder unterschiedliche Winkel mit der Sonotrodenfläche einschließen. Dabei kann eine der beiden Anschlagkanten auch zumindest annähernd orthogonal zur Sonotrodenfläche bzw. zumindest annähernd parallel zur Seitenschieberfläche und/oder zur Touchierfläche ausgerichtet sein. Es ist jedoch zweckmäßig, wenn die beiden Anschlagkanten in der Endposition der beiden Aufnahmeelemente jeweils schräg zur Sonotrodenfläche ausgerichtet sind. Die beiden Anschlagkanten der Fügeteilaufnahme können ferner in einer gemeinsamen Ebene liegen, d. h. in der zweiten Achsenrichtung miteinander fluchten, oder auch seitlich zueinander versetzt angeordnet sein. Durch eine derartige v-förmige Verjüngung kann erreicht werden, dass beim Schweißen jeweils nur ein Fügeteil auf der Sonotrodenfläche aufliegt, d. h. direkten Kontakt mit der Sonotrode hat.

Die Fügeteilaufnahme kann ausgeformt sein, um ein Verschieben der Fügeteile in der dritten Achsenrichtung zu ermöglichen. Beispielsweise können die Fügeteile zunächst in die Fügeteilaufnahme eingelegt bzw. darin vorpositioniert werden und dann durch Verschieben in der dritten Achsenrichtung in den Einlegeraum eingeschoben werden.

Die Fügeteilaufnahme kann gegenüber einer offenen Seite des Einlegeraums angeordnet sein. Darunter kann verstanden werden, dass der Einlegeraum an einer Seite, an der die Fügeteilaufnahme anzuordnen ist, in der Ausgangsposition der beiden Aufnahmeelemente offen ist und durch Zusammenführen der beiden Aufnahmeelemente an dieser Seite zumindest teilweise begrenzt wird. Die Fügeteilaufnahme selbst kann dabei auch außerhalb des eigentlichen Einlegeraums angeordnet sein. Darunter kann verstanden werden, dass die Fügeteilaufnahme in der dritten Achsenrichtung einen deutlichen Abstand zur Sonotrodenfläche, beispielsweise einen Abstand zwischen 1 cm und 10 cm, aufweist. In der Ausgangsposition kann die betreffende Seite des Einlegeraums beispielsweise uneingeschränkt zugänglich sein.

Beispielsweise ist es durch Variieren einer Anordnung des ersten Aufnahmeelements relativ zu dem zweiten Aufnahmeelement, d. h. durch Variieren der Endposition des ersten Aufnahmeelements und/oder der Endposition des zweiten Aufnahmeelements, möglich, einen Öffnungswinkel, der durch die beiden Anschlagkanten in der Endposition der beiden Aufnahmeelemente eingeschlossen wird, und/oder eine jeweilige Neigung der beiden Anschlagkanten relativ zur Sonotrodenfläche zu variieren. Somit ist es möglich, den Öffnungswinkel bzw. die jeweilige Neigung der beiden Anschlagkanten an einen Gesamtquerschnitt der Fügeteile bzw. an ein Fügeteil mit dem jeweils größten Querschnitt anzupassen. Eine solche Anpassung kann mit dem Zweck erfolgen, dass auch bei variierenden Querschnitten und variierender Anzahl der Fügeteile möglichst das Fügeteil mit dem größten Querschnitt auf der Sonotrodenfläche positioniert wird und die übrigen Fügeteile übereinander oder zumindest auf dem Fügeteil mit dem größten Querschnitt positioniert werden, bevor sie miteinander verschweißt werden.

Optional, etwa bei ungünstigen Fügeteilkombinationen, kann der Einlegeraum durch einen beispielsweise frei einstellbaren Seitenschieber zusätzlich begrenzt werden. Aufgrund der durch die Fügeteilaufnahme bewirkten Vorausrichtung der Fügeteile ist dies jedoch nicht unbedingt erforderlich. Vielmehr kann der Seitenschieber beim Einlegen der Fügeteile auch so weit eingefahren sein, dass der Einlegeraum eine maximale Breite aufweist. Dadurch kann die Zugänglichkeit des Einlegeraums für den Bediener verbessert werden.

Im einfachsten Fall können die beiden Aufnahmeelemente als verschiebbare Platten ausgestaltet sein, wobei die Anschlagkanten jeweils durch eine schräge Stirnkante der Platten gebildet sein kann. Möglich sind jedoch auch beliebige andere Ausführungsformen. So können die beiden Aufnahmeelemente etwa auch als schräg gestellte Stäbe ausgestaltet sein. Beispielsweise ist es möglich, dass zumindest eines der beiden Aufnahmeelemente drehbar oder dreh- und verschiebbar gelagert ist. Wesentlich ist, dass die beiden Anschlagkanten in der Endposition der beiden Aufnahmeelemente eine geometrisch bestimmte Aufnahme für die Fügeteile bilden, durch die die Fügeteile in der ersten Achsenrichtung und der zweiten Achsenrichtung in einer definierten Position gehalten werden.

Ein derartiger Ansatz kann ein Einbringen der Fügeteile in den Einlegeraum insofern vereinfachen, als dass die Fügeteile auch von weniger geübten Bediener mit geringem Zeitaufwand in einer definierten Lage übereinandergestapelt werden können, bevor sie zusammengedrückt bzw. miteinander verschweißt werden. Insbesondere kann es die Fügeteilaufnahme dem Bediener erleichtern, ein Fügeteil mit dem größten Querschnitt beim Einlegen zuunterst zu positionieren, sodass beim Schweißen jeweils nur das Fügeteil mit dem größten Querschnitt direkten mechanischen Kontakt zur Sonotrode hat, während die anderen Fügeteile auf diesem Fügeteil aufliegen und/oder übereinanderliegen. Je nach Anordnung der beiden Aufnahmeelemente in der Endposition kann zudem eine bestimmte Anordnung der Fügeteile in der zweiten Achsenrichtung, beispielsweise in horizontaler Richtung, vorgegeben werden. Beispielsweise ist es dadurch möglich, die Fügeteile in einem definierten Abstand zur Seitenschieberfläche und/oder zur Touchierfläche, etwa annähernd mittig im Einlegeraum zwischen der Seitenschieberfläche und der Touchierfläche, zu positionieren. Somit können die Fügeteile anwenderunabhängig vorausgerichtet, d. h. vor einem Schweißprozess in eine annähernd ideale Position gebracht werden.

Gemäß einer Ausführungsform kann in der Endposition die erste Anschlagkante in der zweiten Achsenrichtung zumindest abschnittsweise über die Seitenschieberfläche hinausragen. Zusätzlich oder alternativ kann in der Endposition die zweite Anschlagkante in der zweiten Achsenrichtung zumindest abschnittsweise über die Touchierfläche hinausragen.

Anders ausgedrückt können die beiden Aufnahmeelemente in der Endposition derart angeordnet sein, dass sich in einem Zwischenraum zwischen einer durch die Seitenschieberfläche aufgespannten Ebene und einer durch die Touchierfläche aufgespannten Ebene lediglich ein Abschnitt der ersten Anschlagkante bzw. der zweiten Anschlagkante befindet. Beispielsweise kann eine maximale Breite des Einlegeraums durch einen Abstand zwischen der Seitenschieberfläche und der Touchierfläche vorgegeben sein. Dadurch, dass zumindest eine der beiden Anschlagkanten über die Seitenschieberfläche bzw. die Touchierfläche hinausragt, kann die Breite des Einlegeraums zur Sonotrodenfläche hin, beispielsweise nach unten, zumindest einseitig eingeschränkt werden, während sie an einer der Sonotrodenfläche gegenüberliegenden Seite, beispielsweise oben, maximal bleiben kann. Dadurch kann das Einlegen der Fügeteile vereinfacht werden und es kann trotzdem vermieden werden, dass Fügeteile auf der Sonotrodenfläche nebeneinanderliegen.

Gemäß einer Ausführungsform kann die erste Anschlagkante in der Endposition schräg zur Sonotrodenfläche ausgerichtet sein. Zusätzlich oder alternativ kann die zweite Anschlagkante in der Endposition schräg zur Sonotrodenfläche ausgerichtet sein.

Mit anderen Worten kann eine der beiden Anschlagkanten zumindest annähernd orthogonal zur Sonotrodenfläche ausgerichtet sein, während eine andere der beiden Anschlagkanten schräg zur Sonotrodenfläche ausgerichtet sein kann. Besonders zweckmäßig ist es, wenn beide Anschlagkanten schräg zur Sonotrodenfläche ausgerichtet sind. Dadurch kann erreicht werden, dass die Fügeteile beim Einlegen in eine definierte Position in der zweiten Achsenrichtung gebracht werden oder einen bestimmten Abstand in der zweiten Achsenrichtung zur Seitenschieberfläche und zur Touchierfläche aufweisen. Insbesondere ist es dadurch möglich, die Fügeteile mittig gegenüber der Sonotrodenfläche bzw. zwischen der Seitenschieberfläche und der Touchierfläche zu positionieren. Dies kann sich positiv auf ein Schweißergebnis auswirken. Wie bereits erwähnt, können die Anschlagkanten dabei annähernd gleiche oder unterschiedliche Winkel mit der Sonotrodenfläche einschließen.

Gemäß einer Ausführungsform können das erste Aufnahmeelement und das zweite Aufnahmeelement unabhängig voneinander bewegbar angeordnet sein.

Mit anderen Worten können die beiden Aufnahmeelemente unabhängig voneinander verstellbar sein. Beispielsweise ist es dadurch möglich, die Endpositionen der beiden Aufnahmeelemente unabhängig voneinander einzustellen. Somit kann die Fügeteilaufnahme flexibel an unterschiedliche Querschnitte der Fügeteile angepasst werden.

Gemäß einer Ausführungsform kann das erste Aufnahmeelement in der Endposition eine Bewegung des zweiten Aufnahmeelements beschränken. Ergänzend oder alternativ kann das zweite Aufnahmeelement in der Endposition eine Bewegung des ersten Aufnahmeelements beschränken.

Anders ausgedrückt kann das erste Aufnahmeelement in der Endposition einen Anschlag für das zweite Aufnahmeelement bilden, wobei der Anschlag die Endposition des zweiten Aufnahmeelements vorgibt, oder umgekehrt. Somit kann eine Neigung der zweiten Anschlagkante relativ zur Sonotrodenfläche beispielsweise durch Verändern der Endposition des ersten Aufnahmeelements variiert werden oder umgekehrt.

Beispielsweise kann das erste Aufnahmeelement verschiebbar gelagert sein, während das zweite Aufnahmeelement drehbar gelagert sein kann. Dabei kann das erste Aufnahmeelement ausgeführt sein, um in der Endposition eine Drehbewegung des zweiten Aufnahmeelements zu begrenzen. Die Neigung der zweiten Anschlagkante relativ zur Sonotrodenfläche kann hierbei von einem Drehwinkel des zweiten Aufnahmeelements abhängig sein. So kann die Neigung etwa umso geringer sein, je größer der Drehwinkel ausgehend von der Ausgangsposition ist. Ein maximaler Drehwinkel des zweiten Aufnahmeelements, und damit eine minimale Neigung der zweiten Anschlagkante, ist in diesem Fall durch die Endposition des ersten Aufnahmeelements vorgegeben.

Gemäß einer Ausführungsform kann die Ultraschallschweißeinrichtung ferner eine Antriebseinrichtung aufweisen. Die Antriebseinrichtung kann ausgeführt sein, um das erste Aufnahmeelement und/oder das zweite Aufnahmeelement durch Beaufschlagen mit einer Antriebskraft zwischen der Ausgangsposition und der Endposition zu bewegen.

Unter einer Antriebseinrichtung kann eine Einrichtung zum motorischen Bewegen der beiden Aufnahmeelemente verstanden werden. Hierzu kann die Antriebseinrichtung beispielsweise einen Elektromotor umfassen. Denkbar ist auch eine Antriebseinrichtung mit einem pneumatischen oder hydraulischen Aktor, etwa in Form eines Linearaktors.

Die Antriebseinrichtung kann Kopplungselemente zur mechanischen Kopplung des ersten Aufnahmeelements mit dem zweiten Aufnahmeelement und/oder Führungselemente zur Führung einer jeweiligen Bewegung der beiden Aufnahmeelemente umfassen. Die mechanische Kopplung kann beispielsweise ausgeführt sein, um eine Bewegung des ersten Aufnahmeelements unter Berücksichtigung eines bestimmten Übersetzungsverhältnisses in eine Bewegung des zweiten Aufnahmeelements umzusetzen oder umgekehrt. Zusätzlich oder alternativ kann die Antriebseinrichtung zusätzliche Kopplungselemente zur mechanischen Kopplung mindestens eines der beiden Aufnahmeelemente mit dem Seitenschieber umfassen. Alternativ zu einer solchen mechanischen Kopplung kann die Antriebseinrichtung für jedes der beiden Aufnahmeelemente oder auch für den Seitenschieber ein eigenes Stellglied, beispielsweise einen eigenen Elektromotor, umfassen. Dabei können die Stellglieder durch eine entsprechende Steuerung abhängig voneinander verstellbar sein, ohne dass eine mechanische Kopplung der beiden Aufnahmeelemente bzw. mindestens eines der beiden Aufnahmeelemente mit dem Seitenschieber erforderlich ist. Die Antriebseinrichtung ermöglicht eine präzise, reproduzierbare Verstellung der beiden Aufnahmeelemente.

Gemäß einer Ausführungsform kann die Ultraschallschweißeinrichtung ferner eine Steuereinrichtung aufweisen, die ausgeführt ist, um basierend auf einem vorgegebenen Gesamtquerschnitt der Fügeteile ein Steuersignal für die Antriebseinrichtung zu erzeugen. Dabei kann die Antriebseinrichtung ausgeführt sein, um basierend auf dem Steuersignal das erste Aufnahmeelement und/oder das zweite Aufnahmeelement zwischen der Ausgangsposition und einer an den Gesamtquerschnitt angepassten Endposition zu bewegen.

Die Steuereinrichtung kann beispielsweise ausgeführt sein, um Eingaben eines Bedieners der Ultraschallschweißeinrichtung zu verarbeiten. Möglich ist etwa, dass die Steuereinrichtung basierend auf den Eingaben des Bedieners einen Gesamtquerschnitt oder einen maximalen Querschnitt der Fügeteile berechnet. Die Antriebseinrichtung kann ausgeführt sein, um den berechneten (Gesamt-)Querschnitt in eine entsprechende Bewegung der beiden Aufnahmeelemente umzusetzen oder diese in entsprechend gewählte Endpositionen zu verfahren. Beispielsweise kann ein Öffnungswinkel der Fügeteilaufnahme umso größer gewählt werden, je größer der berechnete (Gesamt-)Querschnitt ist. Ferner kann die Antriebseinrichtung ausgeführt sein, um eine Position der Fügeteilaufnahme in der zweiten Achsenrichtung und/oder einen Abstand zwischen der Seitenschieberfläche und der Touchierfläche basierend auf dem Steuersignal entsprechend dem berechneten (Gesamt-)Querschnitt einzustellen. Durch diese Ausführungsform kann die Bedienung der Ultraschallschweißeinrichtung weiter vereinfacht werden. Insbesondere kann dadurch die Anzahl manuell durchzuführender Bedienschritte reduziert werden.

Gemäß einer Ausführungsform kann der Seitenschieber zwischen einer Ausgangsposition und einer Endposition bewegbar angeordnet sein. Dabei kann in der Ausgangsposition des Seitenschiebers ein Abstand zwischen der Seitenschieberfläche und der Touchierfläche in der zweiten Achsenrichtung größer als in der Endposition des Seitenschiebers sein.

Mit anderen Worten kann eine Breite des Einlegeraums durch Bewegen des Seitenschiebers verändert werden. Insbesondere kann der Seitenschieber in der zweiten Achsenrichtung relativ zur Sonotrodenfläche bzw. zur Touchierfläche verschiebbar angeordnet sein. Dabei kann unter einer Ausgangsposition des Seitenschiebers eine eingefahrene Position und unter einer Endposition eine ausgefahrene Position des Seitenschiebers verstanden werden.

Gemäß einer Ausführungsform kann die Antriebseinrichtung ausgeführt sein, um ferner den Seitenschieber durch Beaufschlagen mit einer Antriebskraft zwischen der Ausgangsposition und der Endposition zu bewegen.

Dabei kann die Antriebseinrichtung ausgeführt sein, um den Seitenschieber unabhängig oder abhängig von den beiden Aufnahmeelementen zu bewegen.

Gemäß einer Ausführungsform kann die Antriebseinrichtung ausgeführt sein, um den Seitenschieber abhängig von einer Bewegung des ersten Aufnahmeelements und/oder des zweiten Aufnahmeelements zu bewegen.

Anders ausgedrückt kann sich der Seitenschieber in einer ersten Endposition befinden, wenn sich mindestens eines der beiden Aufnahmeelemente in einer ersten Endposition befindet, und sich in einer von der ersten Endposition abweichenden zweiten Endposition befinden, wenn sich mindestens eines der beiden Aufnahmeelemente in einer von der ersten Endposition abweichenden zweiten Endposition befindet. Beispielsweise kann der Seitenschieber derart mit mindestens einem der beiden Aufnahmeelemente gekoppelt sein, dass ein Abstand der Seitenschieberfläche zur Touchierfläche umso geringer ist, je geringer ein Öffnungswinkel der Fügeteilaufnahme ist, oder umgekehrt. Dadurch können der Seitenschieber und das erste bzw. zweite Aufnahmeelement in einem einzigen Schritt gemeinsam verstellt werden. Somit kann die Bedienung der Ultraschallschweißeinrichtung weiter vereinfacht werden.

Gemäß einer Ausführungsform kann das erste Aufnahmeelement in der zweiten Achsenrichtung verschiebbar gelagert sein. Zusätzlich oder alternativ kann das zweite Aufnahmeelement in der zweiten Achsenrichtung verschiebbar gelagert sein.

Anders ausgedrückt wird dadurch eine Verstellung des ersten bzw. zweiten Aufnahmeelements parallel zur Sonotrodenfläche ermöglicht. Beispielsweise kann das erste Aufnahmeelement zusammen mit dem Seitenschieber in der zweiten Achsenrichtung verschiebbar gelagert sein. Die beiden Aufnahmeelemente können in zueinander entgegengesetzten Richtungen verschiebbar gelagert sein, sodass die beiden Aufnahmeelemente beim Bewegen in ihre jeweilige Endposition linear aufeinander zubewegt werden und beim Bewegen in ihre jeweilige Ausgangsposition linear voneinander wegbewegt werden. Dadurch kann eine Lagerung des ersten bzw. zweiten Aufnahmeelements mit geringem konstruktivem Aufwand umgesetzt werden.

Gemäß einer Ausführungsform kann das erste Aufnahmeelement drehbar gelagert sein, zusätzlich oder alternativ kann das zweite Aufnahmeelement drehbar gelagert sein.

Beispielsweise kann aus Gründen eines beschränkten Bauraums zumindest eines der beiden Aufnahmeelemente drehbar gelagert sein. Möglich ist auch, dass mindestens eines der beiden Aufnahmeelemente sowohl dreh- als auch verschiebbar gelagert ist.

Gemäß einer Ausführungsform kann die Ultraschallschweißeinrichtung ein weiteres erstes Aufnahmeelement mit einer weiteren ersten Anschlagkante und ein weiteres zweites Aufnahmeelement mit einer weiteren zweiten Anschlagkante aufweisen. Dabei können das weitere erste Aufnahmeelement und das weitere zweite Aufnahmeelement zwischen einer weiteren Ausgangsposition und einer weiteren Endposition relativ zueinander bewegbar angeordnet sein. Die weitere erste Anschlagkante und die weitere zweite Anschlagkante können in der weiteren Endposition gegenüber einer weiteren offenen Seite des Einlegeraums zusammengeführt sein, um eine weitere Fügeteilaufnahme zum Aufnehmen weiterer Fügeteile zu bilden, und in der weiteren Ausgangsposition auseinandergeführt sein. Dabei kann die weitere Fügeteilaufnahme v-förmig ausgeführt sein, um die weiteren Fügeteile in der ersten Achsenrichtung und der zweiten Achsenrichtung zu positionieren.

Das erste Aufnahmeelement und das weitere erste Aufnahmeelement können beispielsweise jeweils seitlich des Seitenschiebers angeordnet sein, wobei der Seitenschieber zwischen dem ersten Aufnahmeelement und dem weiteren ersten Aufnahmeelement bewegbar angeordnet sein kann. Analog dazu können das zweite Aufnahmeelement und das weitere zweite Aufnahmeelement beispielsweise jeweils seitlich des Touchierelements angeordnet sein. Dabei kann das erste Aufnahmeelement zusammen mit dem weiteren ersten Aufnahmeelement zwischen der Ausgangs- und der Endposition bewegbar sein. Ergänzend oder alternativ kann das zweite Aufnahmeelement zusammen mit dem weiteren zweiten Aufnahmeelement zwischen der Ausgangs- und der Endposition bewegbar sein. Die Fügeteilaufnahme und die weitere Fügeteilaufnahme können beispielsweise einander gegenüberliegend und/oder an unterschiedlichen Seiten des Einlegeraums angeordnet sein. Dadurch können Fügeteile von unterschiedlichen, insbesondere einander gegenüberliegenden Seiten in einer definierten Ausrichtung in den Einlegeraum eingelegt werden. Das erste Aufnahmeelement und das weitere erste Aufnahmeelement können beispielsweise baugleich ausgeführt sein. Ebenso können beispielsweise das zweite Aufnahmeelement und das weitere zweite Aufnahmeelement baugleich ausgeführt sein.

Gemäß einer Ausführungsform können die Fügeteilaufnahme und die weitere Fügeteilaufnahme an einander gegenüberliegenden Seiten des Einlegeraums angeordnet sein.

Bei den einander gegenüberliegenden Seiten kann es sich beispielsweise um eine in der dritten Achsenrichtung ausgerichtete vordere bzw. hintere Seite des Einlegeraums handeln. Die Fügeteilaufnahme und die weitere Fügeteilaufnahme können miteinander fluchtend angeordnet sein. Es ist jedoch auch möglich, dass die Fügeteilaufnahme und die weitere Fügeteilaufnahme seitlich zueinander versetzt angeordnet sind. Dadurch kann erreicht werden, dass längliche Fügeteile, die in Form eines Durchgangsknotens miteinander verschweißt werden sollen, jeweils korrekt ausgerichtet von einander gegenüberliegenden Seiten in den Einlegeraum eingebracht werden können.

Es wird darauf hingewiesen, dass mögliche Merkmale und Vorteile von Ausführungsformen der Erfindung hierin teilweise mit Bezug auf eine erfindungsgemäß ausgestaltete Ultraschallschweißeinrichtung und teilweise mit Bezug auf eine Art und Weise, wie diese betrieben oder verwendet werden kann, beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine schematische Darstellung einer Ultraschallschweißeinrichtung gemäß einem Ausführungsbeispiel der Erfindung mit Aufnahmeelementen in einer Endposition.
Fig. 2 zeigt die Ultraschallschweißeinrichtung aus Fig. 1 mit Aufnahmeelementen in einer alternativen Endposition.
Fig. 3 zeigt die Ultraschallschweißeinrichtung aus Fig. 1 mit Aufnahmeelementen in einer Ausgangsposition.
Fig. 4 zeigt die Ultraschallschweißeinrichtung aus Fig. 1 in der Draufsicht.
Fig. 5 zeigt die Ultraschallschweißeinrichtung aus Fig. 1 in perspektivischer Ansicht.
Fig. 6 zeigt die Ultraschallschweißeinrichtung aus Fig. 2 in perspektivischer Ansicht.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

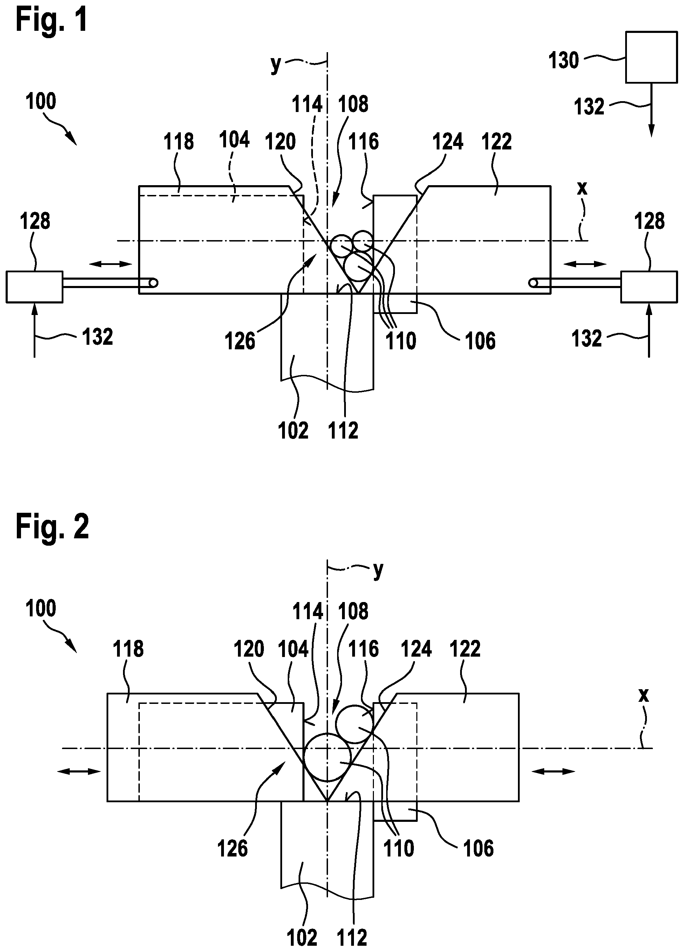

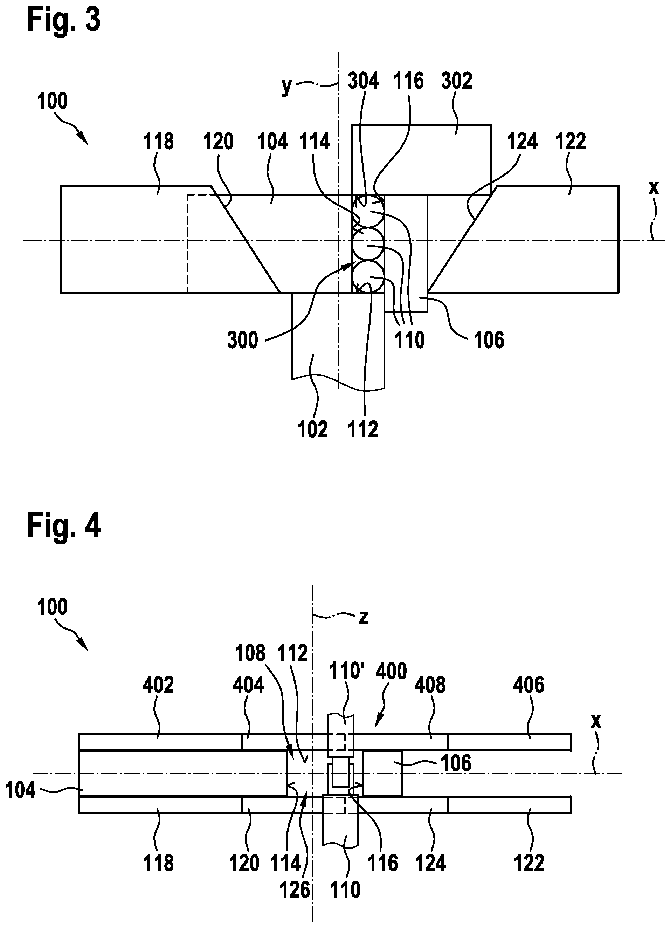

Fig. 1 zeigt eine schematische Darstellung einer Ultraschallschweißeinrichtung 100 mit einer Sonotrode 102, einem Seitenschieber 104 und einem Touchierelement 106. Die Sonotrode 102, der Seitenschieber 104 und das Touchierelement 106 begrenzen einen Einlegeraum 108 zum Einlegen von Fügeteilen 110, hier beispielhaft von drei Kabeln mit miteinander zu verschweißenden Kabelenden. Der Einlegeraum 108 wird an einer ersten Seite, hier einer unteren Seite, von einer Sonotrodenfläche 112 der Sonotrode 102 begrenzt. Die erste Seite begrenzt den Einlegeraum 108 dabei in einer ersten Achsenrichtung y. An einer zweiten Seite, hier einer linken Seite, bzw. einer der zweiten Seite gegenüberliegenden dritten Seite, hier einer rechten Seite, wird der Einlegeraum 108 von einer Seitenschieberfläche 114 des Seitenschiebers 104 bzw. von einer Touchierfläche 116 des Touchierelements 106 begrenzt. Die zweite Seite und die dritte Seite begrenzen den Einlegeraum 108 dabei in einer zur ersten Achsenrichtung y orthogonalen zweiten Achsenrichtung x. Beispielhaft ist der Einlegeraum 108 an einer der ersten Seite gegenüberliegenden vierten Seite, hier einer oberen Seite, offen. Ebenso ist der Einlegeraum 108 an einer fünften Seite, hier einer vorderen Seite, und an einer der fünften Seite gegenüberliegenden sechsten Seite, hier einer hinteren Seite, offen, sodass die Fügeteile 110 in diesem Beispiel von vorn, hinten und oben in den Einlegeraum 108 eingelegt werden können. Zum Verschweißen der Fügeteile 110 kann die obere Seite beispielsweise durch einen in beiden Achsenrichtungen x, y bewegbar angeordneten Amboss verschlossen werden, wie in Fig. 3 gezeigt.

Um ein möglichst gutes Schweißergebnis zu erzielen, sollten die Fügeteile 110 in der ersten Achsenrichtung y möglichst übereinander in dem Einlegeraum 108 positioniert sein. Insbesondere sollten auf der Sonotrodenfläche 112 keine Fügeteile 110 nebeneinanderliegen. Um dies zu verhindern, ist es hilfreich, wenn ein Fügeteil 110 mit dem größten Querschnitt zuunterst positioniert wird und die übrigen Fügeteile 110 auf dem Fügeteil 110 mit dem größten Querschnitt positioniert werden.

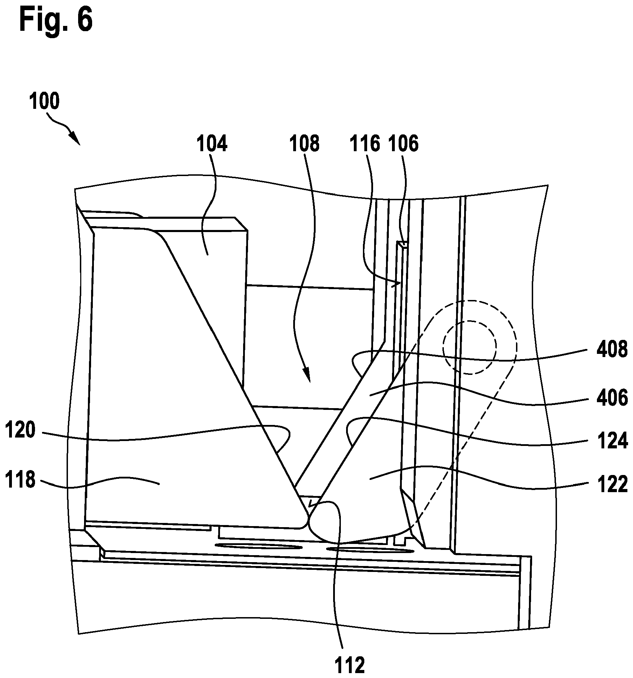

Um einem Bediener der Ultraschallschweißeinrichtung 100 eine derartige Positionierung der Fügeteile 110 im Einlegeraum 108 zu erleichtern, weist die Ultraschallschweißeinrichtung 100 ein erstes Aufnahmeelement 118 mit einer ersten Anschlagkante 120 und ein zweites Aufnahmeelement 122 mit einer zweiten Anschlagkante 124 auf. Die beiden Aufnahmeelemente 118, 122 sind jeweils zwischen einer Ausgangsposition und einer Endposition bewegbar, hier beispielhaft in der zweiten Achsenrichtung x verschiebbar, angeordnet. Ergänzend oder alternativ kann mindestens eines der beiden Aufnahmeelemente 118, 122 drehbar gelagert sein, wie in Fig. 6 gezeigt. In Fig. 1 sind die beiden Aufnahmeelemente 118, 122 jeweils in ihrer Endposition gezeigt. Dabei sind die beiden Anschlagkanten 120, 124, die jeweils schräg zur Sonotrodenfläche 112 verlaufen, zu einer v-förmigen Fügeteilaufnahme 126 miteinander kombiniert, in die die Fügeteile 110 eingelegt werden können. Anders ausgedrückt bilden die beiden zusammengeführten Anschlagkanten 120, 124 einen v- oder keilförmigen Ausschnitt gegenüber der vorderen Seite des Einlegeraums 108. In diesen Ausschnitt können die Fügeteile 110 eingelegt werden. Die v-Form der Fügeteilaufnahme 126 hat den Effekt, dass die Fügeteile 110 sowohl in der ersten Achsenrichtung y, also senkrecht zur Sonotrodenfläche 112, als auch in der zweiten Achsenrichtung x, also waagrecht zur Sonotrodenfläche 112, so ausgerichtet werden, dass das Fügeteil 110 mit dem größten Querschnitt möglichst in einer Spitze der v-Form zum Liegen kommt und die übrigen Fügeteile 110 übereinanderliegen oder auf dem Fügeteil 110 mit dem größten Querschnitt, jedoch nicht auf der Sonotrodenfläche 112 aufliegen.

Die Endpositionen der beiden Aufnahmeelemente 118, 122 sind in diesem Beispiel so gewählt, dass ein Abschnitt der ersten Anschlagkante 120 über die Seitenschieberfläche 114 hinausragt und ein Abschnitt der zweiten Anschlagkante 124 über die Touchierfläche 116 hinausragt. Mit anderen Worten befindet sich die Spitze der v-Form in einer x-Position, d. h. in einer Position in der zweiten Achsenrichtung x, die zwischen einer x-Position der Seitenschieberfläche 114 und einer x-Position der Touchierfläche 116 liegt. Je nach x-Position der Spitze können die Fügeteile 110 relativ zur Sonotrodenfläche 112 beispielsweise entweder mittig oder eher nach links oder eher nach rechts versetzt im Einlegeraum 108 platziert werden. Die x-Position der Spitze, d. h. die entsprechenden jeweiligen Endpositionen der beiden Aufnahmeelemente 118, 122, können somit abhängig von einem größten Querschnitt der Fügeteile 110 gewählt werden.

Wie in Fig. 1 beispielhaft gezeigt, können sich die beiden Aufnahmeelemente 118, 122 in ihrer jeweiligen Endposition, etwa im Bereich der Anschlagkanten 120, 124, miteinander berühren. Dabei ist es möglich, dass das erste Aufnahmeelement 118 in der Endposition einen Anschlag für das zweite Aufnahmeelement 122 bildet oder umgekehrt. Anders ausgedrückt kann das zweite Aufnahmeelement 122 nur so weit in der zweiten Achsenrichtung x verschoben werden, bis es an das in seiner Endposition befindliche erste Aufnahmeelement 118 stößt. In diesem Sinn kann die Endposition des zweiten Aufnahmeelements 122 durch die Endposition des ersten Aufnahmeelements 118 vorgegeben sein. Möglich ist aber auch, dass die beiden Aufnahmeelemente 118, 122 unabhängig voneinander bewegbar angeordnet sind.

Zusätzlich umfasst die Ultraschallschweißeinrichtung 100 eine Antriebseinrichtung 128 zum Beaufschlagen der beiden Aufnahmeelemente 118, 122 mit einer in der zweiten Achsenrichtung x wirkenden Antriebskraft, durch die die beiden Aufnahmeelemente 118, 122 in zueinander entgegengesetzten Richtungen zwischen ihrer jeweiligen Ausgangs- und Endposition verschoben werden. Beispielhaft ist die Antriebseinrichtung 128 hier durch zwei separate Linearaktoren gebildet, die je mit einem der Aufnahmeelemente 118, 122 gekoppelt sind.

Gemäß einem Ausführungsbeispiel ist die Antriebseinrichtung 128 mittels einer Steuereinrichtung 130 steuerbar. Diese kann ausgeführt sein, um basierend auf einer Eingabe des Bedieners, beispielsweise einer Eingabe bezüglich eines größten Querschnitts oder eines Gesamtquerschnitts der Fügeteile 110, ein entsprechendes Steuersignal 132 zu erzeugen. Die Antriebseinrichtung 128 kann ausgeführt sein, um die beiden Aufnahmeelemente 118, 122 basierend auf dem Steuersignal 132 in entsprechende Endpositionen zu verfahren. Beispielsweise können die Endpositionen durch die Steuereinrichtung 130 so gewählt werden, dass die Spitze der v-Form, d. h. ein Bereich, in dem die Anschlagkanten 120, 124 zusammenlaufen, umso mittiger zwischen der Seitenschieberfläche 114 und der Touchierfläche 116 platziert ist, je größer der größte Querschnitt und/oder der Gesamtquerschnitt der Fügeteile 110 ist.

Ebenso wie die Aufnahmeelemente 118, 122 kann auch der Seitenschieber 104 in der zweiten Achsenrichtung x zwischen einer Ausgangsposition und einer Endposition verschiebbar angeordnet sein, wobei die Seitenschieberfläche 114 zusammen mit der Touchierfläche 116 in der Ausgangsposition des Seitenschiebers 114 eine maximale Breite des Einlegeraums 108 in der zweiten Achsenrichtung x vorgeben kann. Optional kann der Seitenschieber 104 mit mindestens einem der beiden Aufnahmeelemente 118, 122 mechanisch gekoppelt sein, sodass das betreffende Aufnahmeelement und der Seitenschieber 104 abhängig voneinander bewegt werden können, wenn das betreffende Aufnahmeelement durch die Antriebseinrichtung 128 mit der Antriebskraft beaufschlagt wird. Dabei ist eine Bewegung des Seitenschiebers 104 als eine lineare oder nicht lineare Funktion einer Bewegung des betreffenden Aufnahmeelements aufzufassen oder umgekehrt. Die Funktion kann durch eine entsprechende Steuerkurve oder Bahnführung realisiert sein.

Fig. 2 zeigt die Ultraschallschweißeinrichtung 100 aus Fig. 1 in einer alternativen Endposition der beiden Aufnahmeelemente 118, 122, in der die Fügeteilaufnahme 126 im Vergleich zu Fig. 1 in der zweiten Achsenrichtung x weiter nach links gerückt ist. Anders ausgedrückt befindet sich die Spitze der durch die beiden Anschlagkanten 120, 124 gebildeten v-Form hier zumindest annähernd mittig zwischen einer durch die Seitenschieberfläche 114 aufgespannten Ebene und einer durch die Touchierfläche 116 aufgespannten Ebene, während sich die Spitze in Fig. 1 näher an der Touchierfläche 116 als an der Seitenschieberfläche 114 befindet. Dadurch ist es möglich, Fügeteile 110 mit einem im Vergleich zu Fig. 1 größeren Querschnitt im Einlegeraum 108 zu positionieren. Es ist zweckmäßig, wenn die Spitze in der ersten Achsenrichtung y unterhalb der Sonotrodenfläche 112 liegt. Dadurch ist sichergestellt, dass zur Positionierung der Fügeteile 110 auf der Sonotrodenfläche 112 ausreichend Platz zur Verfügung steht und das zuunterst liegende Fügeteil 110 beim Schweißvorgang flächig auf der Sonotrodenfläche 112 aufliegt.

Fig. 3 zeigt die Ultraschallschweißeinrichtung 100 aus Fig. 1 während eines Schweißvorgangs. Dabei befinden sich die beiden Aufnahmeelemente 118, 122 in ihrer jeweiligen Ausgangsposition. Der Seitenschieber 104 befindet sich in seiner Endposition. Der Einlegeraum 108 ist zu einem Schweißraum 300 verkleinert, der im Unterschied zum Einlegeraum 108 an der oberen Seite durch einen Amboss 302 verschlossen ist. Die übereinandergestapelten Fügeteile 110 werden in dem Schweißraum 300 mit einem definierten Druck zusammengedrückt und durch Ultraschallschwingungen der Sonotrode 102 miteinander verschweißt. Genauer ausgedrückt werden die Fügeteile 110 in der ersten Achsenrichtung y zwischen der Sonotrodenfläche 112 und einer der Sonotrodenfläche 112 zugewandten Ambossfläche 304 und in der zweiten Achsenrichtung x zwischen der Seitenschieberfläche 114 und der Touchierfläche 116 zusammengedrückt. Beide Aufnahmeelemente 118, 122 befinden sich in ihrer jeweiligen Ausgangsposition außerhalb des Schweißraums 300.

Fig. 4 zeigt die Ultraschallschweißeinrichtung 100 aus Fig. 1 in der Draufsicht. Dabei ist zu erkennen, dass die Fügeteile 110 von der vorderen Seite und weitere Fügeteile 110' von der hinteren Seite in den Einlegeraum 108 eingeführt sind, um einen Durchgangsknoten zu erzeugen. Aus Gründen der Übersichtlichkeit ist in Fig. 4 jeweils nur ein Exemplar der Fügeteile 110, 110' dargestellt. Um die Fügeteile 110, 110' an beiden Seiten des Einlegeraums 108 in der ersten Achsenrichtung y und der zweiten Achsenrichtung x geeignet zu lagern, weist die Ultraschallschweißeinrichtung 100 in diesem Beispiel zusätzlich zur Fügeteilaufnahme 126 eine weitere v-förmige Fügeteilaufnahme 400 zum Einlegen der weiteren Fügeteile 110' auf. Die weitere Fügeteilaufnahme 400 umfasst analog zur Fügeteilaufnahme 126 ein weiteres erstes Aufnahmeelement 402 mit einer weiteren ersten Anschlagkante 404 und ein weiteres zweites Aufnahmeelement 406 mit einer weiteren zweiten Anschlagkante 408. Die weiteren Aufnahmeelemente 402, 406 sind jeweils ebenfalls in der zweiten Achsenrichtung x zwischen einer Ausgangsposition und einer Endposition verschiebbar angeordnet, wobei sie in ihrer jeweiligen Endposition die weitere Fügeteilaufnahme 400 bilden.

Für das Schweißen von Durchgangsknoten ist es zweckmäßig, wenn, wie in Fig. 4 zu erkennen, die beiden Fügeteileaufnahmen 126, 400 einander gegenüberliegend angeordnet sind, sodass die in ihnen positionierten Fügeteile 110, 110' in einer dritten Achsenrichtung z miteinander fluchten. Die dritte Achsenrichtung z kann orthogonal zur ersten Achsenrichtung y und zur zweiten Achsenrichtung x ausgerichtet sein.

Der Seitenschieber 104 kann beispielsweise zwischen dem ersten Aufnahmeelement 118 und dem weiteren ersten Aufnahmeelement 402 angeordnet sein. Ergänzend oder alternativ kann das Touchierelement 106 zwischen dem zweiten Aufnahmeelement 122 und dem weiteren zweiten Aufnahmeelement 406 angeordnet sein.

Die Aufnahmeelemente 118, 122, 402, 406 können beispielsweise jeweils als einfache Platte, etwa als Winkelblech, mit einer abgeschrägten Stirnseite als Anschlagkante realisiert sein. Es sind aber auch andere geeignete Ausführungsformen möglich, etwa eine Anschlagkante mit geschwungener Kontur. Ergänzend oder alternativ können die Aufnahmeelemente 118, 122, 402, 406, wie bereits erwähnt, auch schwenkbar angeordnet sein, wie in Fig. 6 schematisch angedeutet.

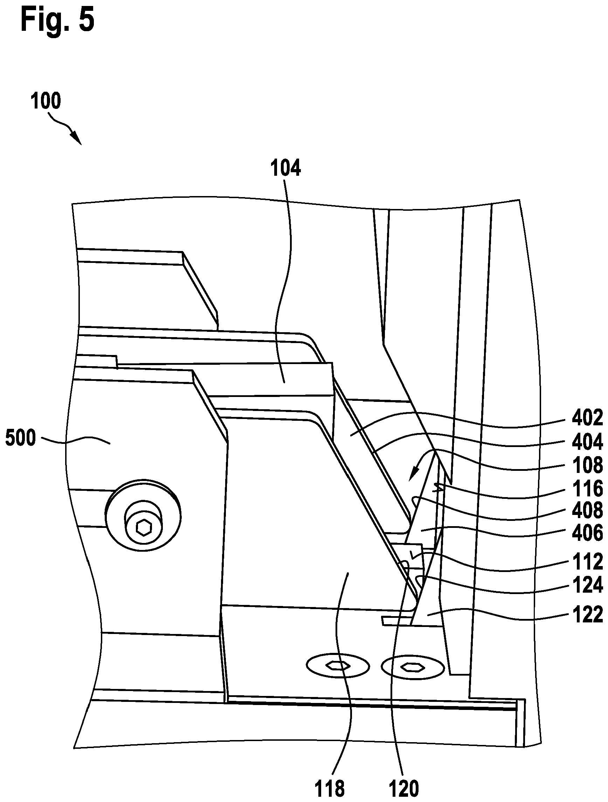

Fig. 5 zeigt die Ultraschallschweißeinrichtung 100 aus Fig. 1 in perspektivischer Ansicht. Zu erkennen ist eine Linearführungseinrichtung 500 zum linearen Führen des ersten Aufnahmeelements 118 und des weiteren ersten Aufnahmeelements 402. Die Linearführungseinrichtung 500, die als eine Komponente der Antriebseinrichtung 128 aufgefasst werden kann, kann ausgeführt sein, um den Seitenschieber 104 abhängig von einem Verstellweg der beiden Aufnahmeelemente 118, 402 zu verstellen. Die Aufnahmeelemente 118, 122, 402, 406 befinden sich hier jeweils in einer Endposition, die sich insbesondere zum Verschweißen elektrischer Leitungen mit kleinerem Querschnitt eignet.

Fig. 6 zeigt die Ultraschallschweißeinrichtung 100 aus Fig. 2 in perspektivischer Ansicht. Wie bereits anhand von Fig. 2 beschrieben, sind die Endpositionen der Aufnahmeelemente 118, 122, 402, 406 hier so gewählt, dass elektrische Leitungen mit größerem Querschnitt beim Einlegen in etwa mittig zwischen dem Seitenschieber 104 und dem Touchierelement 106 positioniert werden. Weiter ist zu erkennen, dass das zweite Aufnahmeelement 122 und das weitere zweite Aufnahmeelement 406 hier im Gegensatz zu dem ersten Aufnahmeelement 118 und dem weiteren ersten Aufnahmeelement 402 drehbar gelagert sind, um zwischen der Ausgangsposition und der Endposition verstellt werden zu können. Nachfolgend werden verschiedene Ausführungsbeispiele der Erfindung nochmals mit anderen Worten zusammengefasst.

Ein Verfahrweg der Aufnahmeelemente 118, 122, 402, 406 kann beispielsweise durch eine Steuerkurve oder einen entsprechend programmierten Stellantrieb vorgegeben sein. Das gegenüber dem ersten Aufnahmeelement 118 platzierte zweite Aufnahmeelement 122 bzw. das gegenüber dem weiteren ersten Aufnahmeelement 402 platzierte weitere zweite Aufnahmeelement 406 kann je nach Anzahl und Querschnitt der miteinander zu verschweißenden Fügeteile 110 zusätzlich zugeschaltet werden, um einen v-förmigen Einlegeabschnitt zum Einlegen der Fügeteile 110 bzw. der weiteren Fügeteile 110' auszubilden.

Wie bereits erwähnt, können die ersten Aufnahmeelemente 118, 402 und/oder die zweiten Aufnahmeelemente 122, 406 jeweils abhängig von einer Bewegung des Seitenschiebers 104 entsprechend einem vorgegebenen, insbesondere variierbaren Übersetzungsverhältnis, etwa mittels einer Steuerkurve, verfahrbar sein.

Eine jeweilige Neigung der Anschlagkanten 120, 124, 404, 408 gegenüber der Sonotrodenfläche 112 kann variierbar sein, beispielsweise durch entsprechendes Schwenken der betreffenden Aufnahmeelemente 118, 122, 402, 406. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

### Bezugszeichenliste

- y: erste Achsenrichtung
- x: zweite Achsenrichtung
- z: dritte Achsenrichtung
- 100: Ultraschweißeinrichtung
- 102: Sonotrode
- 104: Seitenschieber
- 106: Touchierelement
- 108: Einlegeraum
- 110: Fügeteil
- 110': weiteres Fügeteil
- 112: Sonotrodenfläche
- 114: Seitenschieberfläche
- 116: Touchierfläche
- 118: erstes Aufnahmeelement
- 120: erste Anschlagkante
- 122: zweites Aufnahmeelement
- 124: zweite Anschlagkante
- 126: Fügeteilaufnahme
- 128: Antriebseinrichtung
- 130: Steuereinrichtung
- 132: Steuersignal
- 300: Schweißraum
- 302: Amboss
- 304: Ambossfläche
- 400: weitere Fügeteilaufnahme
- 402: weiteres erstes Aufnahmeelement
- 404: weitere erste Anschlagkante
- 406: weiteres zweites Aufnahmeelement
- 408: weitere zweite Anschlagkante
- 500: Linearführungseinrichtung

## Patentansprüche

1. Ultraschallschweißeinrichtung (100), aufweisend:
eine Sonotrode (102) mit einer Sonotrodenfläche (112);
einen Seitenschieber (104) mit einer Seitenschieberfläche (114);
ein Touchierelement (106) mit einer Touchierfläche (116);
einen Einlegeraum (108) zum Einlegen von Fügeteilen (110, 110');
wobei der Einlegeraum (108) in einer ersten Achsenrichtung (y) an einer ersten Seite durch die Sonotrodenfläche (112) und in einer zweiten Achsenrichtung (x) an einer zweiten Seite durch die Seitenschieberfläche (114) und an einer der zweiten Seite gegenüberliegenden dritten Seite durch die Touchierfläche (116) begrenzt ist;
**dadurch gekennzeichnet, dass** die Ultraschallschweißeinrichtung ferner aufweist:
ein erstes Aufnahmeelement (118) mit einer ersten Anschlagkante (120);
ein zweites Aufnahmeelement (122) mit einer zweiten Anschlagkante (124);
wobei das erste Aufnahmeelement (118) und das zweite Aufnahmeelement (122) zwischen einer Ausgangsposition und einer Endposition relativ zueinander bewegbar angeordnet sind;
wobei die erste Anschlagkante (120) und die zweite Anschlagkante (124) in der Endposition gegenüber einer offenen Seite des Einlegeraums (108) zusammengeführt sind, um eine Fügeteilaufnahme (126) zum Aufnehmen der Fügeteile (110) zu bilden, und in der Ausgangsposition auseinandergeführt sind;
wobei die Fügeteilaufnahme (126) v-förmig ausgeführt ist, um die Fügeteile (110) in der ersten Achsenrichtung (y) und der zweiten Achsenrichtung (x) in dem Einlegeraum (108) zu positionieren.

2. Ultraschallschweißeinrichtung (100) nach Anspruch 1,
wobei in der Endposition die erste Anschlagkante (120) in der zweiten Achsenrichtung (x) zumindest abschnittsweise über die Seitenschieberfläche (114) hinausragt; und/oder
wobei in der Endposition die zweite Anschlagkante (124) in der zweiten Achsenrichtung (x) zumindest abschnittsweise über die Touchierfläche (116) hinausragt.

3. Ultraschallschweißeinrichtung (100) nach einem der vorhergehenden Ansprüche,
wobei die erste Anschlagkante (120) in der Endposition schräg zur Sonotrodenfläche (112) ausgerichtet ist; und/oder
wobei die zweite Anschlagkante (124) in der Endposition schräg zur Sonotrodenfläche (112) ausgerichtet ist.

4. Ultraschallschweißeinrichtung (100) nach einem der vorhergehenden Ansprüche,
wobei das erste Aufnahmeelement (118) und das zweite Aufnahmeelement (122) unabhängig voneinander bewegbar angeordnet sind.

5. Ultraschallschweißeinrichtung (100) nach einem der vorhergehenden Ansprüche,
wobei das erste Aufnahmeelement (118) in der Endposition eine Bewegung des zweiten Aufnahmeelements (122) beschränkt; und/oder
wobei das zweite Aufnahmeelement (122) in der Endposition eine Bewegung des ersten Aufnahmeelements (118) beschränkt.

6. Ultraschallschweißeinrichtung (100) nach einem der vorhergehenden Ansprüche, ferner aufweisend:
eine Antriebseinrichtung (128), die ausgeführt ist, um das erste Aufnahmeelement (118) und/oder das zweite Aufnahmeelement (122) durch Beaufschlagen mit einer Antriebskraft zwischen der Ausgangsposition und der Endposition zu bewegen.

7. Ultraschallschweißeinrichtung (100) nach Anspruch 6, ferner aufweisend:
eine Steuereinrichtung (130), die ausgeführt ist, um basierend auf einem vorgegebenen Gesamtquerschnitt der Fügeteile (110) ein Steuersignal (132) für die Antriebseinrichtung (128) zu erzeugen;
wobei die Antriebseinrichtung (128) ausgeführt ist, um basierend auf dem Steuersignal (132) das erste Aufnahmeelement (118) und/oder das zweite Aufnahmeelement (122) zwischen der Ausgangsposition und einer an den Gesamtquerschnitt angepassten Endposition zu bewegen.

8. Ultraschallschweißeinrichtung (100) nach einem der vorhergehenden Ansprüche,
wobei der Seitenschieber (104) zwischen einer Ausgangsposition und einer Endposition bewegbar angeordnet ist;
wobei in der Ausgangsposition des Seitenschiebers (104) ein Abstand zwischen der Seitenschieberfläche (114) und der Touchierfläche (116) in der zweiten Achsenrichtung (x) größer als in der Endposition des Seitenschiebers (104) ist.

9. Ultraschallschweißeinrichtung (100) nach Anspruch 8 in Kombination mit Anspruch 6 oder 7,
wobei die Antriebseinrichtung (128) ausgeführt ist, um ferner den Seitenschieber (104) durch Beaufschlagen mit einer Antriebskraft zwischen der Ausgangsposition und der Endposition zu bewegen.

10. Ultraschallschweißeinrichtung (100) nach Anspruch 9,
wobei die Antriebseinrichtung (128) ausgeführt ist, um den Seitenschieber (104) abhängig von einer Bewegung des ersten Aufnahmeelements (118) und/oder des zweiten Aufnahmeelements (122) zu bewegen.

11. Ultraschallschweißeinrichtung (100) nach einem der vorhergehenden Ansprüche,
wobei das erste Aufnahmeelement (118) in der zweiten Achsenrichtung (x) verschiebbar gelagert ist; und/oder
wobei das zweite Aufnahmeelement (122) in der zweiten Achsenrichtung (x) verschiebbar gelagert ist.

12. Ultraschallschweißeinrichtung (100) nach einem der vorhergehenden Ansprüche,
wobei das erste Aufnahmeelement (118) drehbar gelagert ist; und/oder
wobei das zweite Aufnahmeelement (122) drehbar gelagert ist.

13. Ultraschallschweißeinrichtung (100) nach einem der vorhergehenden Ansprüche, ferner aufweisend:
ein weiteres erstes Aufnahmeelement (402) mit einer weiteren ersten Anschlagkante (404);
ein weiteres zweites Aufnahmeelement (406) mit einer weiteren zweiten Anschlagkante (408);
wobei das weitere erste Aufnahmeelement (402) und das weitere zweite Aufnahmeelement (406) zwischen einer weiteren Ausgangsposition und einer weiteren Endposition relativ zueinander bewegbar angeordnet sind;
wobei die weitere erste Anschlagkante (404) und die weitere zweite Anschlagkante (408) in der weiteren Endposition gegenüber einer weiteren offenen Seite des Einlegeraums (108) zusammengeführt sind, um eine weitere Fügeteilaufnahme (400) zum Aufnehmen weiterer Fügeteile (110') zu bilden, und in der weiteren Ausgangsposition auseinandergeführt sind;
wobei die weitere Fügeteilaufnahme (400) v-förmig ausgeführt ist, um die weiteren Fügeteile (110') in der ersten Achsenrichtung (y) und der zweiten Achsenrichtung (x) in dem Einlegeraum (108) zu positionieren.

14. Ultraschallschweißeinrichtung (100) nach Anspruch 13,
wobei die Fügeteilaufnahme (126) und die weitere Fügeteilaufnahme (400) an einander gegenüberliegenden Seiten des Einlegeraums (108) angeordnet sind.

## Claims

1. Ultrasonic welding device (100), comprising:
a sonotrode (102) with a sonotrode surface (112);
a lateral slide (104) with a lateral slide surface (114);
a touching element (106) with a touching surface (116);
an insertion chamber (108) for inserting joining parts (110, 110');
wherein the insertion chamber (108) is defined in a first axial direction (y) on a first side by the sonotrode surface (112) and in a second axial direction (x) on a second side by the lateral slide surface (114) and on a third side opposing the second side by the touching surface (116);
**characterized in that** the ultrasonic welding device further comprises:
a first receiving element (118) with a first stop edge (120);
a second receiving element (122) with a second stop edge (124);
wherein the first receiving element (118) and the second receiving element (122) are arranged to be movable in relation to each other between a starting position and an end position;
wherein the first stop edge (120) and the second stop edge (124) are brought together in the end position opposite an open side of the insertion chamber (108) to form a joining part receptacle (126) for receiving the joining parts (110) and are moved apart in the starting position;
wherein the joining part receptacle (126) is v-shaped in order to position the joining parts (110) in the insertion chamber (108) in the first axial direction (y) and the second axial direction (x).

2. Ultrasonic welding device (100) according to claim 1,
wherein, in the end position, the first stop edge (120) in the second axial direction (x) protrudes at least in sections beyond the lateral slide surface (114); and/or
wherein, in the end position, the second stop edge (124) in the second axial direction (x) protrudes at least in sections beyond the touching surface (116).

3. Ultrasonic welding device (100) according to one of the preceding claims,
wherein, in the end position, the first stop edge (120) is aligned at an angle to the sonotrode surface (112); and/or
wherein, in the end position, the second stop edge (124) is aligned at an angle to the sonotrode surface (112).

4. Ultrasonic welding device (100) according to one of the preceding claims,
wherein the first receiving element (118) and the second receiving element (122) are arranged to be movable independently of each other.

5. Ultrasonic welding device (100) according to one of the preceding claims,
wherein, in the end position, the first receiving element (118) limits a movement of the second receiving element (122); and/or
wherein, in the end position, the second receiving element (122) limits a movement of the first receiving element (118).

6. Ultrasonic welding device (100) according to one of the preceding claims, further comprising:
a drive device (128) which is configured to move the first receiving element (118) and/or the second receiving element (122) between the starting position and the end position by applying a driving force.

7. Ultrasonic welding device (100) according to claim 6, further comprising:
a control device (130) which is configured to generate a control signal (132) for the drive device (128) based on a predetermined total cross-section of the joining parts (110);
wherein, based on the control signal (132), the drive device (128) is configured to move the first receiving element (118) and/or the second receiving element (122) between the starting position and an end position which is adapted to the total cross-section.

8. Ultrasonic welding device (100) according to one of the preceding claims,
wherein the lateral slide (104) is arranged to be movable between a starting position and an end position;
wherein, in the starting position of the lateral slide (104), a distance between the lateral slide surface (114) and the touching surface (116) in the second axial direction (x) is greater than in the end position of the lateral slide (104).

9. Ultrasonic welding device (100) according to claim 8 in combination with claim 6 or 7,
wherein the drive device (128) is configured to also move the lateral slide (104) between the starting position and the end position by applying a driving force.

10. Ultrasonic welding device (100) according to claim 9,
wherein the drive device (128) is configured to move the lateral slide (104) depending on a movement of the first receiving element (118) and/or of the second receiving element (122).

11. Ultrasonic welding device (100) according to one of the preceding claims,
wherein the first receiving element (118) is slidably mounted in the second axial direction (x); and/or
wherein the second receiving element (122) is slidably mounted in the second axial direction (x).

12. Ultrasonic welding device (100) according to one of the preceding claims,
wherein the first receiving element (118) is rotatably mounted; and/or
wherein the second receiving element (122) is rotatably mounted.

13. Ultrasonic welding device (100) according to one of the preceding claims, further comprising:
a further first receiving element (402) with a further first stop edge (404);
a further second receiving element (406) with a further second stop edge (408);
wherein the further first receiving element (402) and the further second receiving element (406) are arranged to be movable in relation to each other between a further starting position and a further end position;
wherein the further first stop edge (404) and the further second stop edge (408) are brought together in the further end position opposite a further open side of the insertion chamber (108) to form a further joining part receptacle (400) for receiving further joining parts (110) and are moved apart in the further starting position;
wherein the further joining part receptacle (400) is v-shaped in order to position the further joining parts (110) in the insertion chamber (108) in the first axial direction (y) and the second axial direction (x).

14. Ultrasonic welding device (100) according to claim 13,
wherein the joining part receptacle (126) and the further joining part receptacle (400) are arranged on opposing sides of the insertion chamber (108).

## Revendications

1. Dispositif de soudage par ultrasons (100), comportant :
une sonotrode (102) avec une face de sonotrode (112) ;
un coulisseau latéral (104) avec une face de coulisseau latéral (114) ;
un élément de contact (106) avec une face de contact (116) ;
un espace de mise en place (108) pour mettre en place des pièces à assembler (110, 110') ;
dans lequel l'espace de mise en place (108) est délimité dans une première direction axiale (y), sur un premier côté, par la face de sonotrode (112) et dans une seconde direction axiale (x), sur un deuxième côté, par la face de coulisseau latéral (114) et, sur un troisième côté opposé au deuxième côté, par la face de contact (116) ;
**caractérisé en ce que** le dispositif de soudage par ultrasons comporte en outre :
un premier élément de réception (118) avec un premier bord de butée (120) ;
un second élément de réception (122) avec un second bord de butée (124) ;
dans lequel le premier élément de réception (118) et le second élément de réception (122) sont agencés de manière à pouvoir être déplacés l'un par rapport à l'autre entre une position initiale et une position finale ;
dans lequel le premier bord de butée (120) et le second bord de butée (124) sont rapprochés dans la position finale par rapport à un côté ouvert de l'espace de mise en place (108), afin de former un logement de pièces à assembler (126) pour la réception des pièces à assembler (110), et sont éloignés dans la position initiale ;
dans lequel le logement de pièces à assembler (126) est réalisé en forme de V afin de positionner les pièces à assembler (110) dans l'espace de mise en place (108) dans la première direction axiale (y) et la seconde direction axiale (x).

2. Dispositif de soudage par ultrasons (100) selon la revendication 1,
dans lequel, dans la position finale, le premier bord de butée (120) dans la seconde direction axiale (x) fait saillie au moins partiellement au-delà de la face de coulisseau latéral (114) ; et/ou
dans lequel, dans la position finale, le second bord de butée (124) dans la seconde direction axiale (x) fait saillie au moins partiellement au-delà de la face de contact (116) .

3. Dispositif de soudage par ultrasons (100) selon l'une des revendications précédentes,
dans lequel le premier bord de butée (120) dans la position finale est orienté de manière oblique par rapport à la face de sonotrode (112) ; et/ou
dans lequel le second bord de butée (124) dans la position finale est orienté de manière oblique par rapport à la face de sonotrode (112).

4. Dispositif de soudage par ultrasons (100) selon l'une des revendications précédentes,
dans lequel le premier élément de réception (118) et le second élément de réception (122) sont agencés de manière à pouvoir être déplacés indépendamment l'un de l'autre.

5. Dispositif de soudage par ultrasons (100) selon l'une des revendications précédentes,
dans lequel le premier élément de réception (118) dans la position finale limite un mouvement du second élément de réception (122) ; et/ou
dans lequel le second élément de réception (122) dans la position finale limite un mouvement du premier élément de réception (118).

6. Dispositif de soudage par ultrasons (100) selon l'une des revendications précédentes, comportant en outre :
un dispositif d'entraînement (128) configuré pour déplacer le premier élément de réception (118) et/ou le second élément de réception (122) en appliquant une force d'entraînement entre la position initiale et la position finale.

7. Dispositif de soudage par ultrasons (100) selon la revendication 6, comportant en outre :
un dispositif de commande (130) configuré pour générer, sur la base d'une section transversale totale prédéfinie des pièces à assembler (110), un signal de commande (132) pour le dispositif d'entraînement (128) ;
dans lequel le dispositif d'entraînement (128) est configuré pour déplacer, sur la base du signal de commande (132), le premier élément de réception (118) et/ou le second élément de réception (122) entre la position initiale et une position finale adaptée à la section transversale totale.

8. Dispositif de soudage par ultrasons (100) selon l'une des revendications précédentes,
dans lequel le coulisseau latéral (104) est agencé de manière à pouvoir être déplacé entre une position initiale et une position finale ;
dans lequel, dans la position initiale du coulisseau latéral (104), une distance entre la face de coulisseau latéral (114) et la face de contact (116) dans la seconde direction axiale (x) est supérieure à celle dans la position finale du coulisseau latéral (104).

9. Dispositif de soudage par ultrasons (100) selon la revendication 8 en combinaison avec la revendication 6 ou 7,
dans lequel le dispositif d'entraînement (128) est configuré pour déplacer en outre le coulisseau latéral (104) en appliquant une force d'entraînement entre la position initiale et la position finale.

10. Dispositif de soudage par ultrasons (100) selon la revendication 9,
dans lequel le dispositif d'entraînement (128) est configuré pour déplacer le coulisseau latéral (104) en fonction d'un mouvement du premier élément de réception (118) et/ou du second élément de réception (122).

11. Dispositif de soudage par ultrasons (100) selon l'une des revendications précédentes,
dans lequel le premier élément de réception (118) est monté de manière à pouvoir être déplacé dans la seconde direction axiale (x) ; et/ou
dans lequel le second élément de réception (122) est monté de manière à pouvoir être déplacé dans la seconde direction axiale (x).

12. Dispositif de soudage par ultrasons (100) selon l'une des revendications précédentes,
dans lequel le premier élément de réception (118) est monté de manière rotative ; et/ou
dans lequel le second élément de réception (122) est monté de manière rotative.

13. Dispositif de soudage par ultrasons (100) selon l'une des revendications précédentes, comportant en outre :
un premier élément de réception supplémentaire (402) avec un premier bord de butée supplémentaire (404) ;
un second élément de réception supplémentaire (406) avec un second bord de butée supplémentaire (408) ;
dans lequel le premier élément de réception supplémentaire (402) et le second élément de réception supplémentaire (406) sont agencés de manière à pouvoir être déplacés l'un par rapport à l'autre entre une position initiale supplémentaire et une position finale supplémentaire ;
dans lequel le premier bord de butée supplémentaire (404) et le second bord de butée supplémentaire (408) sont rapprochés dans la position finale supplémentaire par rapport à un côté ouvert supplémentaire de l'espace de mise en place (108), afin de former un logement supplémentaire de pièces à assembler (400) pour recevoir des pièces à assembler supplémentaires (110'), et sont éloignés dans la position initiale supplémentaire ;
dans lequel le logement supplémentaire de pièces à assembler (400) est réalisé en forme de V afin de positionner les pièces à assembler supplémentaires (110') dans l'espace de mise en place (108) dans la première direction axiale (y) et la seconde direction axiale (x).

14. Dispositif de soudage par ultrasons (100) selon la revendication 13,
dans lequel le logement de pièces à assembler (126) et le logement supplémentaire de pièces à assembler (400) sont agencés sur des côtés mutuellement opposés de l'espace de mise en place (108).
